# EUROPEAN PATENT APPLICATION

(11) **EP 4 506 047 A1**
(43) Date of publication of application: **12.02.2025**
(21) Application number: 24189502.8
(22) Date of filing: 18.07.2024
(51) Int. Cl.: A63F 13/422, A63F 13/497, A63F 13/67, A63F 13/79

(54) **SYSTEMS AND METHODS FOR MODIFYING INPUTS TO COMPUTER SYSTEMS**

(30) Priority: 09.08.2023 GB 202312180
(71) Applicant: Sony Interactive Entertainment Inc., Tokyo 108-0075 (JP)
(72) Inventor: COCKRAM, Philip, London, W1F 7LP (GB)
(74) Representative: D Young & Co LLP

(57) **Abstract**

A system for determining an input modifier for an input to a computer based on data sets from multiple users, comprising a correlation unit configured to: receive data sets from multiple users, each data set relating to display output data including a current location and a target location for a user, and corresponding user input data responsive to the display output data; and determine an input modifier based on the data sets, relating a distance between the current location and the target location for a user, to a time taken for the user to move from the current location to the target location.

## Description

### Field

The present invention relates to modifying, adjusting or correcting inputs from computer input devices. More particularly, but not exclusively, the present invention relates to systems and methods for determining and/or using an input modifier for controlling a computing or entertainment system.

### Background

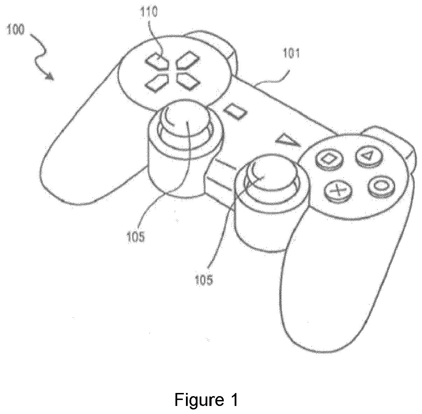

Figure 1 depicts a handheld controller 100 commercially available for a gaming platform. The handheld controller 100 includes dual thumb sticks 105 protruding from the controller body 101. Each thumb stick 105 provides a two-dimensional input (x, y) which may be used to induce a corresponding effect on a displayed graphic. Each thumb stick 105, sometimes called an analogue stick or more generally a control stick or joystick, provides positional input to a computing platform based on the position of the protrusion relative to a mechanical "centre" position within the controller body 101. During use, a user's thumb (or other digit) typically rests on a top surface of each thumb stick 105 and pressure applied by the thumb may change the displacement of the thumb stick 105 relative to the centre position, which may serve as a reference position. A pivoting base of each thumb stick 105 is coupled to two or more potentiometers housed within the controller body 101 to provide a continuous electrical output proportional to the displacement of the thumb stick 105 relative to the central reference position (hence, the term "analogue stick").

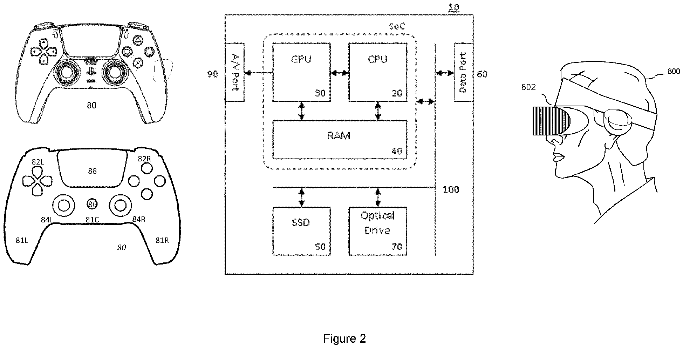

Referring to Figure 2, an example of an entertainment system 10 is a computer or console such. The entertainment system 10 comprises a central processor unit (CPU) 20. The entertainment system 10 also comprises a graphical processing unit or GPU 30. The GPU can be physically separate to the CPU, or integrated with the CPU as a system on a chip (SoC).

The entertainment system 10 also comprises RAM 40, and may either have separate RAM for each of the CPU and GPU, or shared RAM. The or each RAM can be physically separate, or integrated as part of an SoC. Further storage is provided by a disk 50, either as an external or internal hard drive, or as an external solid state drive, or an internal solid state drive.

The entertainment system 10 may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Interaction with the system is typically provided using one or more handheld controllers 80. Such a controller typically has two handle sections 81L,R and a central body 81C. Various controls are distributed over the controller, typically in local groups. Examples include a left button group 82L, which may comprise directional controls and/or one or more shoulder buttons, and similarly right button group 82R, which comprise function controls and/or one or more shoulder buttons. The controller also includes left and/or right joysticks or thumb sticks 84L,R, which may optionally also be operable as buttons by pressing down on them.

The controller 80 (typically in the central portion of the device) may also comprise one or more system buttons 86, which typically cause interaction with an operating system of the entertainment system 10 rather than with a game or other application currently running on it; such buttons may summon a system menu, or allow for recording or sharing of displayed content. Furthermore, the controller may comprise one or more other elements such as a touchpad 88, a light for optical tracking (not shown), a screen (not shown), haptic feedback elements (not shown), and the like.

Audio/visual outputs from the entertainment system 10 are typically provided through one or more A/V ports 90, or through one or more of the wired or wireless data ports 60. Where components are not integrated, they may be connected as appropriate either by a dedicated data link or via a bus 100. An example of a device for displaying images output by the entertainment system 10 is a head mounted display `HMD' 802, worn by a user 800.

Handheld controllers with a control stick (or joystick) are the most popular input device for electronic gaming platforms, but many electronic games are cross-platform (e.g. across different consoles and PCs) and so users participating in multiplayer games may be participating with different input devices, which can each have their own characteristics, strengths and weaknesses.

In particular, for first-person shooter (FPS) games, PC users with mice and keyboards may play alongside/against other players (on the same or different platforms) using controllers. To account for inherent differences in the accuracy of input between different input hardware (such as those between console controllers and keyboard and mouse), some developers may opt to integrate aim assist features for players using one type of input. However, this aiming assistant can tip the balance of play in favour of the aim-assisted players, and can cause frustration for other users.

The present invention aims to address at least some of the issues outlined above.

WO2018224801A1, incorporated herein by reference, discloses computer input devices and more particularly a handheld controller employing one or more control sticks.

### Brief description of the invention

The present invention provides a system for determining an input modifier for an input to a computer based on data sets from multiple users, comprising a correlation unit configured to:
receive data sets from multiple users, each data set relating to display output data including a current location and a target location for a user, and corresponding user input data responsive to the display output data; and
determine an input modifier based on the data sets, relating a distance between the current location and the target location for a user, to a time taken for the user to move from the current location to the target location.

The present invention further provides a system for adjusting an input to a computer using an input modifier, comprising a processor configured to:
receive an input from an input device;
adjust the input based on an input modifier derived by a correlation unit, the correlation unit having been configured to determine the input modifier based on data sets from multiple users, each data set relating to display output data including a current location and a target location, and corresponding user input data responsive to the display output data,
wherein the input modifier relates a distance between the current location and the target location to a time taken for the user to move from the current location to the target location.

The present invention further provides corresponding methods. Further aspects and features of the invention are defined in the dependent claims.

The present invention seeks to improve the speed, accuracy and/or precision of computer inputs. In particular, the present invention seeks to better balance speed, accuracy and/or precision of computer inputs across different input configurations that users may have when participating in online multiplayer games and other software. In some configurations, the present invention provides a dynamic on-the-fly aim assist adjustment that balances play between users using different input device types, which can have varying speed, accuracy and/or precision.

Within this disclosure, the terms 'speed', 'accuracy', and 'precision' have their standard technical definitions, i.e.:
- speed is defined as distance/time, which may be measured e.g. in pixels/sec in this context;
- accuracy defines how close a given set of measurements are to their true value; and
- precision defines how close measurements are to each other, i.e. their repeatability (standard deviation).

Each of these can be assessed for input devices on a per-user basis, e.g. by a user moving between on-screen target locations and assessing:
- speed: how quickly each user moves between targets (e.g. average 8,000 pixels / second)
- accuracy: how close the user positions their current location (e.g. represented by a cursor or reticule) with respect to a target location (e.g. within 5 pixels of centre of target location, on average)
- precision: how repeatably the user positions their current location (e.g. represented by a cursor or reticule) with respect to a target location (e.g. within 4 pixels of average location, which might be offset from the centre of the target location e.g. by 2 pixels).

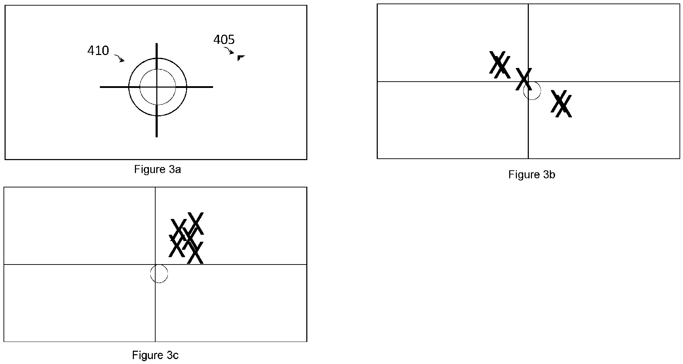

Figures 3a-3c illustrate schematic diagrams of display outputs from a computer system and how the above may be assessed for a user. In this example, the user moves a current on-screen location (e.g. represented by a cursor 405) using an input device to a target location, represented by reticule 410. The starting on-screen location for the cursor 405 might be random or predetermined, and the user provides an input signal via an input device (such as a mouse, joystick or other controller) to move the cursor 405 to the target location and confirming when they are on-target e.g. by pressing a button. The system can then determine speed, accuracy and precision of the user's inputs.

Figures 3b-3c illustrate sample results from the above test, where there are 5 results (represented by X's) plotted around the crosshairs of the reticule 410. From this data, the average speed of movement between targets, as well as the accuracy and precision can readily be determined by positional analysis.

Figure 3b illustrates a high degree of average accuracy, since the average location of the 5 confirmed inputs is substantially at the centre of the reticule 410, whilst the average precision is relatively low, since the marks generally surround the intended target with an offset, providing a loose grouping.

In contrast, figure 3c illustrates a low degree of average accuracy, since the average location of the 5 confirmed inputs is away from the centre of the reticule 410, whilst the average precision is relatively high, since the marks provide a tight grouping, whilst all are offset from the centre of the target.

In some embodiments of the disclosure, the input speed, accuracy and/or precision for players for one input device type (e.g. thumb stick controller) can be adjusted to match the input speed, accuracy and/or precision of players using a different device type (e.g. mouse and keyboard, which is generally more accurate, precise and/or faster than controller thumb sticks), to balance play. Furthermore, in some configurations, with all players/inputs having effectively the same speed, accuracy and/or precision, cheating can be detecting by identifying users that are aiming faster, more accurately and/or precisely than average (or within acceptable limits such as a fraction or multiple standard deviations thereof).

Accordingly, the present invention aims to improve the user experience by making a fairer cross-platform/input-device experience, dynamically adjusting based on skill level and may assist in detecting cheating.

### Brief description of the drawings

Embodiments of the present invention will now be described by way of example only, with reference to the accompanying drawings, in which:
Figure 1 illustrates an isometric view of a conventional handheld electronic game controller.
Figure 2 illustrates a schematic view of an example entertainment computing system 10.
Figures 3a-3c and 4a-4c illustrate schematic diagrams of display outputs from a computer system.
Figure 5 is a schematic diagram illustrating systems for determining an input modifier for an input to a computer and for adjusting an input to a computer using an input modifier, in accordance with an embodiment of the present invention.

For clarity of illustration, elements illustrated in the figures have not necessarily been drawn to scale. Further, where considered appropriate, reference numerals have been repeated among the figures to indicate corresponding or analogous elements.

### Detailed description

The terms "coupled" and "connected," along with their derivatives, may be used herein to describe structural relationships between components of the apparatus or system for performing the operations herein. It should be understood that these terms are not intended as synonyms for each other. Rather, in particular embodiments, "connected" is used to indicate that two or more elements are in direct physical or electrical contact with each other while "coupled" is used to indicate two or more elements are in either direct or indirect (with other intervening elements between them) physical or electrical contact with each other, and/or that the two or more elements co-operate or communicate with each other (e.g., as in a cause and effect relationship).

In the following description, a number of specific details are presented in order to provide a thorough understanding of embodiments of the present disclosure. It will be apparent, however, to a person skilled in the art that these specific details need not be employed to practice the invention. Conversely, specific details known to the person skilled in the art are omitted for the purposes of clarity where appropriate.

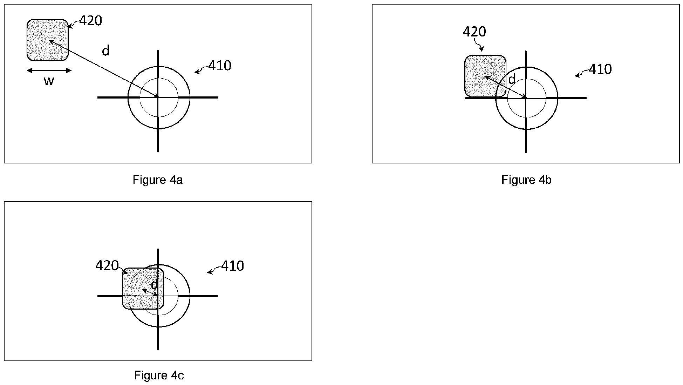

Figures 4a-4c illustrates schematic diagrams of display outputs from a computer system, illustrating how an input correction assistant may operate.

Figure 4a illustrates a simplified, schematic display screen scene for a user playing a first-person shooter ('FPS') video game, depicting a current screen location in the form of an aiming location, represented by a reticule 410, and a target screen location represented by a shape 420, in this case a square having width w. In figure 4a, there is a distance d between the centre of the on-screen current location and the centre of the on-screen target location. In other (more granular/detailed) models, there may be multiple targets 420 and the targets 420 may have multiple target points (e.g. regions of the target 420, which may be assigned different hit points).

At this point in time, the target 420 has just appeared, so the player has not yet reacted to the target 420. In response to the target 420 appearing, the player provides an input signal via their input device, shifting their current aiming location to be closer to the target 420, i.e. reducing the distance d to that depicted in figure 4b, with the outer circle of the reticule 410 slightly overlapping the edge of the target 420, but with the crosshairs of the reticule 410 not over the target 420, as shown.

In this example, in response to the distance d between the current location and the target location falling below a threshold, a universal input correction is provided, which adjusts or corrects the original input signal to move the current aiming location onto the target 420, as illustrated in figure 4c, where the crosshairs of the reticule 410 are now over the edge of the target 420.

In some examples, input correction may effectively provide 'target gravity' which provides all targets with an attractive force 'pulling' crosshairs towards them, and/or 'sticky targeting', where crosshairs effectively 'stick' to a target, making it harder to overshoot.

For example, the input correction may be to:
- translate the user's location by up to 30, 40 or 50% further (e.g. based on distance d) in the same or opposite (preventing overshoot) direction as the original input direction, when distance d is below a threshold; or
- translate the user's location by up to 5, 10, 25, 50, 100 or 200 pixels further in the same or opposite direction as the original input direction, when distance d is below a threshold; or
- translate the user's location by up to 10, 15, 20 or 25% of d towards the centre of mass of the target, when distance d is below a threshold; or
- translate the user's location by up to 5, 10, 25, 50, 100 or 200 pixels towards the centre of mass of the target, when distance d is below a threshold.

The input correction may be applied e.g. within a standard timeframe, such as 50 ms.

In known systems, such an input modifier/correction may be universal i.e. applied to all users, so all users benefit from the same level of assistance.

In embodiments of the invention, the input modifier is based on data sets from multiple users, to provide a dynamic, on-the-fly modifier that adjusts/corrects based on varying circumstances, particularly other users and their configurations which may change over time, to help balance skill levels and different configurations.

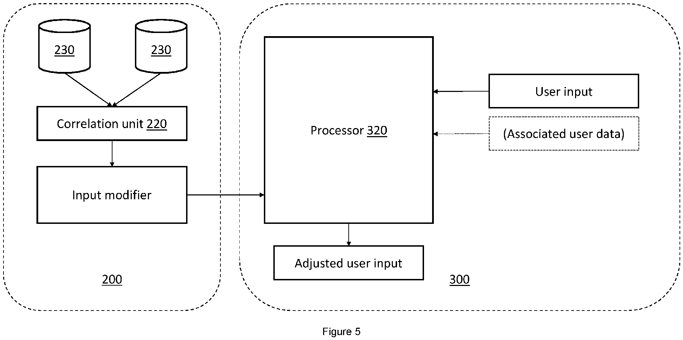

Figure 5 is a schematic diagram illustrating both a system 200 for determining an input modifier for an input to a computer, as well as a system 300 for adjusting an input to a computer using an input modifier, in accordance with embodiments of the present invention.

The system 200 for determining an input modifier for an input to a computer comprises a correlation unit 220 which is configured to receive data sets from multiple users, each data set relating to display output data including a current location (e.g. a current aiming location represented by reticule 410) and a target location (e.g. as represented by target 420) for a user, and corresponding user input data responsive to the display output data (e.g. input data provided by the user when playing a game).

The correlation unit 220 may be integrated within the system, e.g. forming part of entertainment system 10 (e.g. in the SoC), part of the controller 80 or part of a remote device (e.g. server) to which data is transmitted and received.

The display output data may comprise e.g. graphical or telemetry data, whilst the user input data responsive to the display output data may comprise the input signal as well as optional associated user data, which may include one or more user data parameters associated with the input, as described further later. In particular, participating (current generation) games may track the relative position of the current location and the target location e.g. by telemetry, whilst this data may be determined from graphical data for legacy games, which can be derived on-the-fly if needed (noting that legacy games tend to have lower computational requirements, hence providing overhead for modern computers/entertainment systems to analyse this data whilst maintaining game performance).

The correlation unit 220 is configured to determine the input modifier based on the data sets, relating a distance d between the current location and the target location for a user, to a time taken for the user to move from the current location to the target location, e.g. by providing subsequent input responsive to the display output. In other words, the correlation unit 220 is configured to analyse historical user data to determine how long users take to move from their current location to their target location, relative to the distance therebetween.

In its simplest form, this analysis might output an average speed across all user data sets for a given application, such as a single video game, e.g. analysing all user movement where a target is displayed on-screen and the user then provides input which moves their location to their target, such as an average speed of 10,000 pixels/second across all user data sets for one particular application.

In a more accurate model, this may be divided into multiple phases, e.g. average speeds for both i) an initial first movement at relatively high speed towards the target (e.g. when d ≥ z), followed by ii) a slower, but more precise second movement to acquire the target when nearby (e.g. when d < z). As such, the input modifier may relate to (e.g. be derived from) the average speed of users moving from the (i.e. their respective) current location to the (i.e. their respective) target location, in one or multiple phases (e.g. having different threshold distances d). In other examples, the data sets may be for multiple applications in a related series, all applications of a given type/genre, or any subset of users and/or applications, such as all multiplayer matches hosted on a single server, or a prior individual match, or a sub-set of all users.

Accordingly, the correlation unit 220 can determine an input modifier based on the data sets which may be applied to (subsequent) data inputs by users, e.g. by adjusting (subsequent) user input to align with the average user input speed from the historical data sets. For example, the adjustment can be used to enhance movement (e.g. aiming) speed for users who are slower than the average, and/or to reduce the speed of users who are faster than the average. In one example, the input modifier may provide an adjustment based on the average aiming speed for users of a particular input device type (such as mouse and keyboard) to be applied to users using a different input device type (e.g. not a mouse and keyboard). In this way, the input modifier can be applied so that all users have the same effective aiming speed.

Similarly, the adjustment can be used to enhance aiming accuracy and/or precision for users, e.g. by providing assistance/correction in one or more particular directions, based on the average accuracy and/or precision of users, based on the data sets. In particular, due to the generally higher accuracy and/or precision of mouse and keyboard inputs, it may be easier to target higher value target regions of a target 420 (e.g. headshot) than for other input types, and hence the input modifier may adjust the inputs from users using other input types to correspondingly target higher value target regions of the target 420.

The system 300 for adjusting an input to a computer using an input modifier comprises a processor 320 configured to receive an input signal from an input device and adjust the input based on an input modifier. The input signal to the processor 320 may (i.e. optionally) include associated user data as indicated in figure 5, which may include one or more user data parameters associated with the input, as described further later. The input modifier applied to the input data has been derived by a correlation unit 220 in accordance with the above for system 200. This input data is subsequent user data relative to the historical data sets used by the correlation unit 220 to determine the input modifier.

The input modifier itself may comprise one or more modifier parameters (e.g. a scale factor to be applied to an existing correction function such as a universal correction function as outlined above; or a variable for a model such as Fitt's law, which may be used to determine a time to target and states that the time required to move to a target is a function of the ratio between the distance to the target and the width of the target) or a modifier function e.g. mapping a domain of threshold distance ranges to a codomain of speed or time, e.g. via a look-up table.

Accordingly, the input modifier may be a modifier to be applied to an existing (e.g. universal) correction function or model, or may be an independent correction function in itself. The function or model may be simplified, e.g. a linear or polynomial speed function or model designed to approximate the data set, with one or multiple variables.

The input modifier may be determined or applied (i.e. an adjustment made based thereon) dependent on one or more parameters of the user data, which can be derived from user data associated with the input. In other words, the input modifier itself may take into account the one or more user data parameters, or the input adjustment, applying the input modifier, may take into account the one or more user data parameters.

Furthermore, in some embodiments, the input modifier is only determined (by the correlation unit 220) for or applied (by the processor 320) when a distance between the current location and the target location for a user is below a predetermined threshold, e.g. the correlation unit 220 may be configured to only processing relevant data in the data sets and ignore any data in the data sets where the distance between the current location and the target location exceeds the predetermined threshold. The predetermined threshold may also be dependent on one or more user data parameters.

In particular, relevant user data parameters may include:
a profile of the user - for example, a profile of the physical user (such as their physical characteristics, biometrics and/or experience etc.), or a profile of the in-game (virtual) user (such as their physical characteristics, biometrics, experience and/or equipment, e.g. weapon class or individual characteristics, etc.); and/or
a type of input device in use - for example at high level, such as 'thumb stick controller', 'touch screen', 'motion detection', `d-pad' or 'mouse and keyboard', or at a more granular model level, e.g. 'Sony DualShock 3/4^{®}' optionally including hardware revision, or individual serial number; and/or
a direction of the input - for example, the input direction may be divided into N segments (such as 4 cardinal input directions for basic up/down/left/right inputs, 8 cardinal + intercardinal input directions, or any other subdivisions), for providing different adjustments for the N segments. Such division can account for variations in different axes, e.g. movement speed/accuracy/precision left / right (optionally in conjunction with strafing) may be different to up / down; and even differences along the same axis; and/or
a type of computer platform in use - for example at high level, such as `console' or `PC', or at a more granular model level, such as the specific make and model of the console or video game system in use, optionally including hardware configuration/revision or individual serial number.

In particular, if a profile of the user includes physical parameters about the user/character/weapon, then these can be used to create a more realistic input modifier for that user, e.g. making aiming slower/less accurate/less precise for a given e.g. heavy, cumbersome weapon, or e.g. a physically tired player, based on those characteristics.

In some embodiments, the system is configured to identify users moving from their current location to their target location faster, more accurately and/or more precisely than expected based on the data sets, and thus identify who might be cheating (e.g. using another aiming assistant or 'aim-bot'). Optionally, any deviation beyond expectations is identified when said movement exceeds a threshold such as a fraction or multiple standard deviations, e.g. beyond a threshold based on an average or another statistical measure of speed, accuracy and/or precision in the data sets (which may be based on all data sets or a subset thereof). The threshold may be static or dynamic, e.g. updating as more data is processed.

Equally, the system may be configured to identify users moving from their current location to their target location faster, more accurately and/or more precisely than the system-adjusted input (which is based on the input modifier derived from the data sets for multiple users), and optionally may require additional processing time to be implemented, which can be accounted for.

In some embodiments, the system is configured to monitor participating users and compare the speed, accuracy and/or precision of the input modifier (e.g. by monitoring / modelling the input modifier applied to participating users) to the actual inputs received from participating users, to identify notable deviations from expectations based on the data sets.

To provide a simple example, the input modifier may comprise a function, based on the user data sets, which includes applying:
- up to a 25 pixel correction towards the nearest sub-region of a target 420, for any current locations ≤ 25 pixels (i.e. threshold distance d ≤ 25 pixels) from a target sub-region, at a speed of 0.5 pixels per ms (i.e. correcting for 25 pixels in 50 ms); and
- up to a 100 pixel correction towards the nearest sub-region of a target 420, for any current locations within 25-100 pixels (i.e. threshold distance 25 < d ≤ 100 pixels) of a target sub-region, at a speed of 1 pixel per ms (i.e. correcting for 100 pixels in 100 ms).

Accordingly, any users who aim more quickly, accurately and/or precisely than the input modifier, (e.g. by infrequently/never triggering one or more of the threshold distances d for the input correction to apply; repeatedly targeting a high (/highest) value target sub-region; or repeatedly providing inputs that move from off-target to on-target faster than the input modifier adjustment) may be identified by the system e.g. flagged for further monitoring/analysis.

In a more specific application of the above example:
- the input modifier may be determined based on the (e.g. average) speed, accuracy and/or precision for data sets only from users using a particular first input device type (e.g. mouse and keyboard); and
- the system only adjusts input for users using a particular second input device type different to the first input device type (e.g. not mouse and keyboard; or more specifically any controller comprising a thumb stick), based on the input modifier determined as above.

Furthermore, different modifiers may be applied to different subsets of users etc. and a randomiser and/or weighting feature, function or model may be applied to e.g. randomly tweak the final adjusted input for the user, to maintain variation in play.

In an example embodiment of the present invention, the methods and techniques herein may at least partly be implemented using a supervised machine learning model. In particular, in some embodiments, the correlation unit 220 comprises a machine learning model trained to determine the input modifier based on the data sets.

### Supervised learning

In an example embodiment of the present invention, the methods and techniques herein may at least partly be implemented using a supervised machine learning model.

The supervised learning model is trained using labelled training data to learn a function that maps inputs (typically provided as feature vectors) to outputs (i.e. labels). The labelled training data comprises pairs of inputs and corresponding output labels. The output labels are typically provided by an operator to indicate the desired output for each input. The supervised learning model processes the training data to produce an inferred function that can be used to map new (i.e. unseen) inputs to a label.

The input data (during training and/or inference) may comprise various types of data, such as numerical values, images, video, text, or audio. Raw input data may be pre-processed to obtain an appropriate feature vector used as input to the model - for example, features of an image or audio input may be extracted to obtain a corresponding feature vector. It will be appreciated that the type of input data and techniques for pre-processing of the data (if required) may be selected based on the specific task the supervised learning model is used for.

Once prepared, the labelled training data set is used to train the supervised learning model. During training the model adjusts its internal parameters (e.g. weights) so as to optimize (e.g. minimize) an error function, aiming to minimize the discrepancy between the model's predicted outputs and the labels provided as part of the training data. In some cases, the error function may include a regularization penalty to reduce overfitting of the model to the training data set.

The supervised learning model may use one or more machine learning algorithms in order to learn a mapping between its inputs and outputs. Example suitable learning algorithms include linear regression, logistic regression, artificial neural networks, decision trees, support vector machines (SVM), random forests, and the K-nearest neighbour algorithm.

Once trained, the supervised learning model may be used for inference - i.e. for predicting outputs for previously unseen input data. The supervised learning model may perform classification and/or regression tasks. In a classification task, the supervised learning model predicts discrete class labels for input data, and/or assigns the input data into predetermined categories. In a regression task, the supervised learning model predicts labels that are continuous values.

In some cases, limited amounts of labelled data may be available for training of the model (e.g. because labelling of the data is expensive or impractical). In such cases, the supervised learning model may be extended to further use unlabelled data and/or to generate labelled data.

Considering using unlabelled data, the training data may comprise both labelled and unlabelled training data, and semi-supervised learning may be used to learn a mapping between the model's inputs and outputs. For example, a graph-based method such as Laplacian regularization may be used to extend a SVM algorithm to Laplacian SVM in order to perform semi-supervised learning on the partially labelled training data.

Considering generating labelled data, an active learning model may be used in which the model actively queries an information source (such as a user, or operator) to label data points with the desired outputs. Labels are typically requested for only a subset of the training data set thus reducing the amount of labelling required as compared to fully supervised learning. The model may choose the examples for which labels are requested - for example, the model may request labels for data points that would most change the current model, or that would most reduce the model's generalization error. Semi-supervised learning algorithms may then be used to train the model based on the partially labelled data set.

### Generative Al

One or more example embodiments of the present invention may use generative artificial intelligence (Al) systems and techniques.

A generative AI system learns patterns and structures in its input training data, in order to then generate new output data which exhibits similar characteristics to the training data. Each of the input training data and output data may comprise various types of data, such as images, video, text, or audio. For example, the generative AI system may learn patterns in input training images, and then generate images that have similar characteristics.

The generative AI system may generate output data based on an input prompt. Like the training and output data, the prompt may comprise various types of data, such as images, video, text, or audio. The prompt may be of the same or different data type to the model's training and/or output data. For example, the input prompt may comprise text and the output data may comprise an image (e.g. matching an input text description of a desired image), or the input prompt may comprise an image and the output data may comprise audio data (e.g. with a theme matching the input image).

The generative AI system may comprise a generative model trained to learn a probability distribution of the input training data, and generate new output data based on this learned distribution. For example, for a set of data instances / observable variables (X) and a set of labels / target variables (Y) in the training data set, the generative model may learn a joint probability distribution of data instances and labels p(X,Y), and/or a probability distribution of the data instances p(X) (for example where no labels are available).

Example suitable generative models for learning a probability distribution of the input training data include Variational Autoencoders (VAEs), transformer-based models, diffusion models (e.g. denoising diffusion probabilistic models (DDPMs)), Reinforcement Learning (RL), and Generative Adversarial Networks (GANs). The choice of generative model may depend on the specific task performed by the generative Al system.

The generative model may comprise one or more artificial neural networks. For example, a Variational Autoencoder (VAE) may comprise a pair of neural networks acting as an encoder and a decoder to and from a reduced (i.e. latent space) representation of the training data respectively, and a Generative Adversarial Network (GAN) may comprise a first 'generator' neural network that generates new data and a second 'discriminator' neural network that learns to discriminate between generated data and real data. The one or more constituent neural networks of the generative model may be trained together or separately.

During training the generative model may adjust its internal parameters (e.g. neural network weights) so as to optimize (e.g. minimize) a loss/error function, aiming to minimize discrepancy between the generated output data and desired output data. It will be appreciated that the specific loss function, and algorithm used to optimize the function may vary depending on the nature of the generative model, and its intended application. For example, a mean squared error loss function may be used for an image generation task, and a cross-entropy loss function may be used for a text generation task. These loss functions may be optimized using various existing optimization algorithms, such as gradient descent.

Once trained, the generative model may be used to generate new output data based on an input prompt. The input prompt may be provided by a user, or by an appropriate device (e.g. using an application programming interface (API)). Thus, the generative AI system allows generating new content (e.g. images, text, or audio) based on only a prompt and without requiring detailed instructions for doing so.

### Autoencoders

In an example embodiment of the present invention, the methods and techniques herein may at least partly be implemented using an autoencoder.

The autoencoder is a type of an unsupervised machine learning model that uses one or more artificial neural networks to learn an efficient representation of unlabelled input data. The autoencoder may be used to encode various types of data, such as images, video, text, or audio.

The autoencoder may comprise an encoder neural network that encodes input data into a reduced representation (also called a "latent space"), and a decoder neural network that aims to recreate the input data from the encoded reduced representation. The latent space is typically of a lower-dimension than the input data - thus, the latent space generated by the encoder typically provides a more efficient, compressed representation of the input data that requires less memory storage than the original input data.

The encoder neural network may comprise one or more layers that transform input data into a reduced representation. The encoder neural network receives input data, and the final layer of the encoder neural network outputs a reduced representation of the input data, i.e. a latent space (also termed a "bottleneck layer").

The decoder neural network comprises one or more layers that transform data from the latent space into output data of the same dimensionality as the data input to the encoder. The decoder aims to reconstruct the data originally input to the encoder neural network from the latent space representation of the data.

The encoder and/or decoder neural networks typically comprise a plurality of hidden layers. For example, an encoder may comprise a plurality of hidden layers that progressively extract further reduced representations of the input data. Using deeper neural networks (i.e. with a higher number of hidden layers) for the encoder and/or the decoder may improve performance of the autoencoder, and in some cases may reduce the amount of training data that is required.

The encoder and decoder neural networks are typically trained together. During training the autoencoder may adjust its internal parameters (e.g. weights and biases of the encoder and decoder neural networks) so as to optimize (e.g. minimize) a loss/error function, aiming to minimize discrepancy between the data input to the encoder and the output reconstructed data generated by the decoder. It will be appreciated that the specific loss function, and algorithm used to optimize the function may vary depending on the nature of the autoencoder model, and its intended application. In an example, a mean squared error loss function optimized using gradient descent may be used. In some cases, a sparse autoencoder may be used in order to promote sparsity of the latent representation (as compared to the input) and to prevent the autoencoder from learning the identity function - for example, a sparse autoencoder may be implemented by modifying the loss function to include a sparsity regularization penalty.

In some cases, the autoencoder may be a Variational Autoencoder (VAE). The VAE is a specific type of auto-encoder in which a probability model is imposed on the encoded representation by the training process (in that deviations from the probability model are penalised by the training process). The VAE may be used for generative artificial intelligence applications to generate new output data which exhibits similar characteristics to the input encoded data by sampling from the learned latent space.

### Reinforcement learning

One or more example embodiments of the present invention may use reinforcement learning (RL) systems and techniques.

Reinforcement learning is a type of machine learning directed to training an artificial intelligence agent to take actions in an environment that maximize the notion of a cumulative reward. During reinforcement learning, the agent interacts with the environment, and learns from the results of its actions, thus allowing the agent to progressively improve its decision-making.

An RL model typically comprises an action-reward feedback loop. The feedback loop comprises: an environment, state, agent, policy, action, and reward. The environment is the system with which the agent interacts and in which the agent operates - for example, the environment may be a virtual environment of a game. The state represents the current conditions in the environment. The agent receives the state as an input and takes an action which may affect the environment and change the state of the environment. The agent takes the action based on its policy which is a mapping from states of the environment to actions of the agent. The policy may be deterministic or stochastic. The reward represents feedback from the environment to the action taken by the agent. The reward provides an indication (typically in the form of a numerical value) of the desirability of the result of the agent's action. The reward may comprise positive signals to reward desirable behaviour of the agent and/or negative signals to penalize undesirable behaviour of the agent.

Through multiple iterations of action-reward feedback loop, the agent aims to maximise the total cumulative reward it receives, thus learning how to take optimal actions in the environment. The reinforcement learning process thus allows the agent to learn an optimal policy that maximizes the cumulative reward. The cumulative award may be estimated using a value function which estimates the expected return starting from a given state or from a given state and action. Using the cumulative reward in the reinforcement learning process allows the agent to consider long-term effects of its policy.

A reinforcement learning algorithm may be used to refine the agent's policy and the value function over iterations of the action-reward feedback loop. The learning algorithm may rely on a model of the environment (e.g. based on Markov Decision Processes (MDPs)) or be model-free. Example suitable model-free reinforcement learning algorithms include Q-learning, SARSA (State-Action-Reward-State-Action), Deep Q-Networks (DQNs), or Deep Deterministic Policy Gradient (DDPG).

It will be appreciated that the agent will typically engage in both exploration and exploitation of the environment in which it operates. In exploration, the agent takes typically random actions to gather information about the environment and identify potentially desirable actions (i.e. actions that maximise cumulative reward). In exploitation, the agent takes actions that are expected to maximise reward (e.g. by selecting the action based on the agent's latest policy). Various techniques may be used to control the proportion of explorative and exploitative actions taken by the agent - for example, a predetermined probability of taking an explorative action in a given iteration of the feedback loop may be set (and optionally reduced over time to allow the agent to shifts more towards exploitation over time to maximise cumulative reward in view of diminishing returns for further exploration).

In some cases, the RL model may be configured to learn from feedback provided by a user. Utilising user feedback in this way may allow the agent to improve its choice of actions and better align with user preferences. For example, reinforcement learning from human feedback (RLHF) techniques may be used. RLHF includes training a reward model based on user feedback and using this model for determining the reward in the reinforcement learning process described above. The user feedback may be received in various forms depending on the specific reinforcement learning problem being solved - for example, the feedback may be received in the form of a user ranking of instances of the agent's actions. RLHF thus allows incorporating user feedback into the reinforcement learning process. RLHF approaches may be advantageous where it is easier for a user than for an algorithm to assess the quality of the machine learning model's output (e.g. for generative artificial intelligence RL models).

It will be appreciated that the above methods may be carried out on conventional hardware (such as that described previously herein) suitably adapted as applicable by software instruction or by the inclusion or substitution of dedicated hardware. Thus, the required adaptation to existing parts of a conventional equivalent device may be implemented in the form of a computer program product comprising processor implementable instructions stored on a non-transitory machine-readable medium such as a floppy disk, optical disk, hard disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future.

Protection may be sought for any features disclosed in any one or more published documents referenced herein in combination with the present disclosure.

## Claims

1. A system for determining an input modifier for an input to a computer based on data sets from multiple users, comprising a correlation unit configured to:
receive data sets from multiple users, each data set relating to display output data including a current location and a target location for a user, and corresponding user input data responsive to the display output data; and
determine an input modifier based on the data sets, relating a distance between the current location and the target location for a user, to a time taken for the user to move from the current location to the target location.

2. The system of claim 1, further comprising a processor configured to:
receive an input from a user and adjust the input based on the input modifier.

3. A system for adjusting an input to a computer using an input modifier, comprising a processor configured to:
receive an input from an input device;
adjust the input based on an input modifier derived by a correlation unit, the correlation unit having been configured to determine the input modifier based on data sets from multiple users, each data set relating to display output data including a current location and a target location, and corresponding user input data responsive to the display output data,
wherein the input modifier relates a distance between the current location and the target location to a time taken for the user to move from the current location to the target location.

4. The system of any preceding claim, wherein the system is configured to identify users moving from their current location to their target location faster, more accurately and/or more precisely than a threshold that is based on the data sets.

5. The system of any preceding claim, wherein the system is configured to identify users moving from their current location to their target location faster, more accurately and/or more precisely than:
an average speed, accuracy and/or precision derived from the data sets; and/or
the system-adjusted input speed, accuracy and/or precision, based on the input modifier.

6. The system of any preceding claim, wherein the system is configured to determine the input modifier dependent on:
a profile of the user; and/or
a type of input device in use; and/or
a direction of the input; and/or
a type of computer platform in use.

7. The system of any preceding claim, wherein the system is configured to determine the input modifier only for when a distance between the current location and the target location is below a predetermined threshold.

8. The system of claim 2, 3 or any claim dependent thereon, wherein the system is configured to apply the adjustment only when a distance between the current location and the target location is below a predetermined threshold.

9. The system of claim 2, 3, or any claim dependent thereon, wherein adjusting the input based on the input modifier comprises:
adjusting the input from a user using a first input device type, based on a speed, accuracy and/or precision of one or more users moving from their current location to their target location using a second input device type that is different to the first input device type.

10. The system of claim 2, 3, or any claim dependent thereon, wherein adjusting the input based on the input modifier comprises:
i. adjusting the input from a user using a first input device type, based on an average speed, accuracy and/or precision of users moving from their current location to their target location using a second input device type that is different to the first input device type; and
ii. applying a randomising and/or a weighting feature, function or model.

11. The system of any preceding claim, wherein:
the input comprises an input to a video game; and/or
the data sets from multiple users relate to a single video game; and/or
the input modifier provides an aiming assistant.

12. A method for determining an input modifier for an input to a computer based on data sets from multiple users, comprising:
receiving data sets from multiple users, each data set relating to display output data including a current location and a target location for a user, and corresponding user input data responsive to the display output data; and
determining an input modifier based on the data sets, relating a distance between the current location and the target location for a user, to a time taken for the user to move from the current location to the target location.

13. The method of claim 12, further comprising:
receiving an input from a user and adjusting the input based on the input modifier.

14. A method for adjusting an input to a computer using an input modifier, comprising:
receiving an input from an input device;
adjusting the input based on an input modifier derived by a correlation unit, the correlation unit having been configured to determine the input modifier based on data sets from multiple users, each data set relating to display output data including a current location and a target location, and corresponding user input data responsive to the display output data,
wherein the input modifier relates a distance between the current location and the target location to a time taken for the user to move from the current location to the target location.

15. A computer program product or computer-readable storage medium comprising instructions which, when executed by a computer, cause the computer to carry out the method of any of claims 12-14.
